# EUROPÄISCHE PATENTANMELDUNG

(11) **EP 2 921 058 A1**
(43) Veröffentlichungstag der Anmeldung: **23.09.2015**
(21) Anmeldenummer: 14001076.0
(22) Anmeldetag: 21.03.2014
(51) Int. Cl.: A23G 9/50

(54) **Stieleishalter**

(71) Anmelder: Leitner, Gerhard, 9500 Villach (AT)
(72) Erfinder: Leitner, Gerhard, 9500 Villach (AT)

(57) **Zusammenfassung**

Ein Halter für Stieleis besitzt einen Griff an dem eine Schale vorgesehen ist. Die Schale ist auf Ihre vom Griff abgekehrte Seite offen und enthält einen Vorsprung der durch Ausnehmungen (Nuten, Öffnungen) als Aufnahme für Eisstiele ausgebildet ist.

## Beschreibung

Der Stieleishalter fungiert in seiner Form sowohl als Hilfe für das Greifen, als auch als Schmutzschutz. Da der Stiel der Lutscheishersteller, (Holz, Kunststoff) oftmals sehr klein ausfällt gibt es motorische Probleme speziell für Kinder das Eis zu halten. Durch die ergonomisch geformte Geometrie des Halters wird es für das Kind möglich das Stieleis leichter zu halten, wobei das Hauptaugenmerk bei der exakten Umschließung des Halters durch die Finger liegt. Das Schmelzen des Eises führt zusätzlich dazu, dass es über die Hand des Kindes läuft und Schmutz verursacht. Durch die Kammer im Inneren des Halters kann das geschmolzene Eis aufgefangen werden. Beim Benützen des Halters kann dies vermieden werden. Universal deshalb, da der Halter so konzipiert wurde, um jedes Stieleis, von allen namhaften Lutscheisherstellern aufzunehmen.

Einen Ausführungsform des Stieleishalters wird nachstehend Anhand der Zeichnungen erläutert.

Es zeigen:
Fig.1 einen Stieleishalter in Schrägansicht liegend. (2) Zeigt den ergonomisch geformten Griff. (1) Zeigt den Vorsprung mit Ausnehmungen (Nuten, Öffnungen) welche bis in den Griff reichen. (3) Zeigt eine Schale welche vom Griff abgewendet nach vorne offen ist.

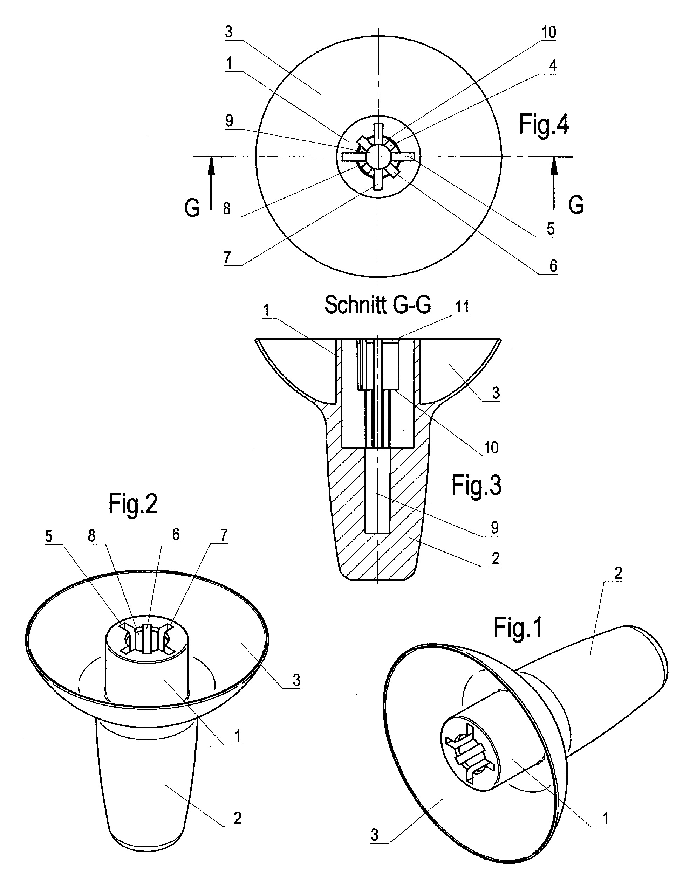

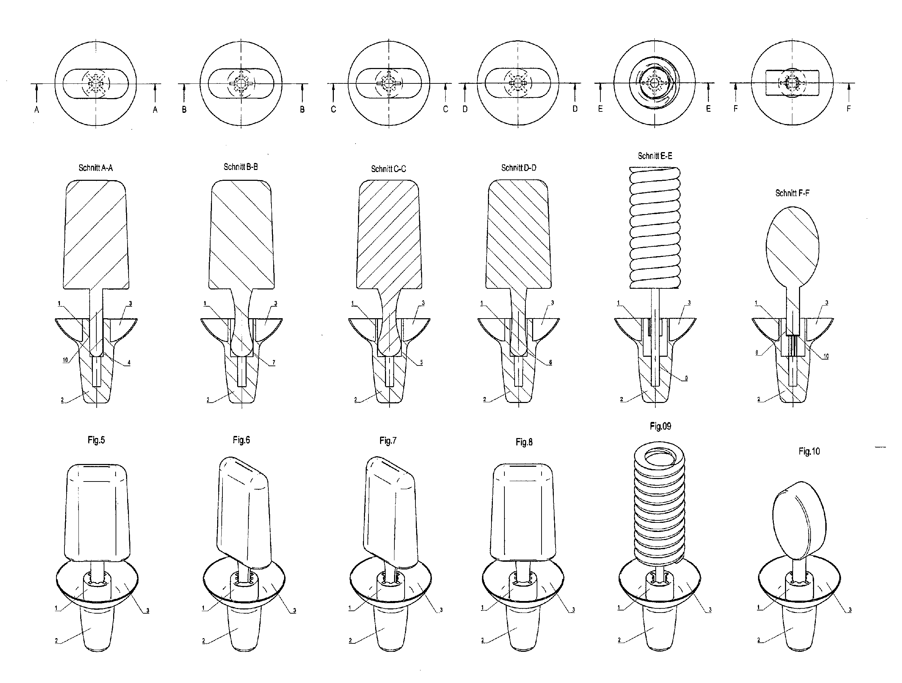

Fig.2 einen Stieleishalter in Schrägansicht stehend. Wie bei Fig.1 ist auch in dieser Fig.2 der Vorsprung(1) der Griff(2) und die Schale (3) ersichtlich. Zusätzlich sind in der Fig.2 auch diverse Nuten und Öffnungen zu erkennen. (5) Zeigt die größte Nut im Vorsprung (1) welche den Eisstiel aufnehmen kann. Diese Situation wird auch in Fig.7 als Schrägansicht und mit dem dazugehörigen Schnitt C-C dargestellt. (6) Zeigt die drittgrößte Nut im Vorsprung (1) welche den Eisstiel aufnehmen kann. Diese Situation wird auch in Fig.8 als Schrägansicht und mit dem dazugehörigen Schnitt D-D dargestellt. (7) Zeigt die zweitgrößte Nut im Vorsprung (1) welche den Eisstiel aufnehmen kann. Diese Situation wird auch in Fig.6 als Schrägansicht und mit dem dazugehörigen Schnitt B-B dargestellt. (8) Zeigt eine große Öffnung im Vorsprung (1) welches den Eisstiel aufnehmen kann. Diese Öffnung (8) ist als Konus ausgeführt. Diese Situation wird auch in Fig.10 als Schrägansicht und mit dem dazugehörigen Schnitt F-F dargestellt.
Fig.3 einen Stieleishalter in Vorderansicht als Schnitt G-G ausgeführt. Zeigt den Vorsprung (1) den ergonomisch geformten Griff (2) und die nach vorne offene Schale (3). In dem Schnitt G-G wird die kleinere Öffnung (9) sichtbar welche bis in den Griff reicht. Diese Öffnung (9) ist als Konus ausgeführt. Diese Situation wird auch in Fig.9 als Schrägansicht und mit dem dazugehörigen Schnitt E-E dargestellt. Hier wird auch der Boden (10) ersichtlich. Ab diesem Boden (10) beginnt die Nut (4) welche in Fig.4 dargestellt ist. Hier wird auch die Fase (11) an der großen Öffnung (8) gezeigt.
Fig.4 einen Stieleishalter in Draufsicht. Zeigt den Vorsprung (1) und die Schale (3). Hier werden die jeweiligen Nuten und Öffnungen (5 - 9) dargestellt welche in Fig.2 und Fig.3 bereits erläutert wurden. Erweiternd wird in Fig.4 die Nut (4) ersichtlich deren Geometrie erst am Boden (10) beginnt. Diese Situation wird auch in Fig.3 Schnitt G-G gezeigt. (4) Zeigt die kleinste Nut im Vorsprung (1) welche den Eisstiel aufnehmen kann. Diese Situation wird auch in Fig.5 als Schrägansicht und mit dem dazugehörigen Schnitt A-A dargestellt.
Fig.5 den Halter in Schrägansicht mit einem Stieleis welches in der Nut (4) gehalten wird. Darüber liegend ist dieser im Schnitt A-A und Draufsicht abgebildet. Weiters zeigt die Fig.5 den Vorsprung (1) den Griff (2) und die Schale (3). Zusätzlich wird der Boden (10), wie in Fig.3 und Fig.4 erläutert, dargestellt. Ab diesem Boden (10) beginnt die Nut (4).
Fig.6 den Halter in Schrägansicht mit einem Stieleis welches in der Nut (7) gehalten wird. Darüber liegend ist dieser im Schnitt B-B und Draufsicht abgebildet. Weiters zeigt die Fig.6 den Vorsprung (1) den Griff (2) und die Schale (3).
Fig.7 den Halter in Schrägansicht mit einem Stieleis welches in der Nut (5) gehalten wird. Darüber liegend ist dieser im Schnitt C-C und Draufsicht abgebildet. Weiters zeigt die Fig.7 den Vorsprung (1) den Griff (2) und die Schale (3).
Fig.8 den Halter in Schrägansicht mit einem Stieleis welches in der Nut (6) gehalten wird. Darüber liegend ist dieser im Schnitt D-D und Draufsicht abgebildet. Weiters zeigt die Fig.8 den Vorsprung (1) den Griff (2) und die Schale (3).
Fig.9 den Halter in Schrägansicht mit einem Stieleis welches in der Öffnung (9) gehalten wird. Darüber liegend ist dieser im Schnitt E-E und Draufsicht abgebildet. Weiters zeigt die Fig.9 den Vorsprung (1) den Griff (2) und die Schale (3).
Fig.10 den Halter in Schrägansicht mit einem Stieleis welches in der Öffnung (8) gehalten wird. Darüber liegend ist dieser im Schnitt F-F und Draufsicht abgebildet. Weiters zeigt die Fig.10 den Vorsprung (1) den Griff (2) die Schale (3) und den Boden (10).

## Patentansprüche

1. Halter für Stieleis mit einem Griff (2) mit einer Schale (3), deren offene Seite vom Griff (2) abgewendet ist und mit wenigstens einer Aufnahme für den Stiel des Eis, dass die Halterung durch Nuten (4,5,6,7) in einem Vorsprung (1) innerhalb der Schale (3) gebildet ist, **dadurch gekennzeichnet, dass** die Nuten (4,5,6,7) zu einer im Vorsprung (1) vorgesehenen Öffnung (8,9) offen sind, und dass zumindest drei Nuten (4,5,6,7) mit unterschiedlichen Abmessungen, insbesondere Tiefe, vorgesehen sind.

2. Halter nach Anspruch 1, **dadurch gekennzeichnet, dass** die Öffnung (8,9) und die Nuten (4,5,6,7) in den Vorsprung (1) und den Griff (2) reichen.
